Europäisches Patentamt

(19) European Patent Office

Office européen des brevets

(11) Numéro de publication: **0 277 150**

**B1**

(12) **FASCICULE DE BREVET EUROPEEN**

(45) Date de publication du fascicule du brevet: **27.12.90**

(51) Int. Cl.⁵: **A 23 L 1/08, A 23 P 1/16**

(21) Numéro de dépôt: **87904485.7**

(22) Date de dépôt: **20.07.87**

(86) Numéro de dépôt international:
**PCT/CH87/00090**

(87) Numéro de publication internationale:
**WO 88/00796 11.02.88 Gazette 88/04**

(54) **PRODUIT ALIMENTAIRE DE FAIBLE DENSITE CONSTITUE PAR UNE MOUSSE DE MIEL ET SON PROCEDE DE FABRICATION.**

(30) Priorité: **28.07.86 CH 3021/86**

(43) Date de publication de la demande:
**10.08.88 Bulletin 88/32**

(45) Mention de la délivrance du brevet:
**27.12.90 Bulletin 90/52**

(84) Etats contractants désignés:
**BE CH DE FR GB IT LI LU NL SE**

(56) Documents cités:
**US-A-3 366 494**
**US-A-4 004 040**
**US-A-20 523 58**
**US-A-42 320 49**

(73) Titulaire: **BATTELLE MEMORIAL INSTITUTE**
**7 route de Drize**
**CH-1227 Carouge/Genève (CH)**

(72) Inventeur: **GIDDEY, Claude**
**59, route de Chêne**
**CH-1208 Genève (CH)**
Inventeur: **DOVE, Gorges**
**1, quai du Cheval Blanc**
**CH-1227 Carouge (CH)**

(74) Mandataire: **Dousse, Blasco et al**
**7, route de Drize**
**CH-1227 Carouge/Genève (CH)**

Courier Press, Leamington Spa, England.

# EP 0 277 150 B1

**Description**

La présente invention a pour objet un produit alimentaire allégé, c'est-à-dire une mousse de miel constituée par une dispersion stable de micro-bulles d'air ou d'un gaz inerte dans du miel fondu non-crémé contenant au moins un stabilisateur et un agent foisonnant, cette mousse ayant une densité inférieure à 0,7. Cette mousse présente une consistance ferme, non-coulante quoique tendre et moelleuse, et susceptible de s'étaler sans effort, par exemple sur le pain. Par le terme de "non-crémé, on veut dire qu'il s'agit d'un miel liquide sans phase microcristalline constituée par du sucre de miel cristallisé. L'invention a également pour objet un procédé pour préparer une telle mousse de miel.

Il ne semble pas qu'un tel miel en mousse fasse déjà partie de l'état de la technique. Ainsi, le brevet US—A—3,976,803 décrit une mousse comprenant approximativement, en poids, 50% d'un mélange 3—97:97—3 de sirop de glucose et de sirop de maltose et 50% de dextrose ou un mélange de dextrose et saccharose.

Par ailleurs, le document US—A—1,686,556 décrit une émulsion de miel (ou de substances analogues à des sirops) avec de l'albumine d'oeuf, cette émulsion se présentant sous forme d'une crème ou pâte à étaler sur des biscuits ou des tranches de pain ou utilisable pour le glaçage de gâteaux et pour le remplissage de pâtisserie. On forme une telle émulsion crémeuse en battant du miel avec de l'albumine d'oeuf, de préférence à environ 80°C (180°F), cette albumine pouvant être, soit sous forme d'une solution aqueuse d'albumine non battue, soit sous forme d'albumine préalablement battue en neige. La densité de cette crème n'est cependant pas inférieure à 0,7 et par ailleurs, il s'agit d'une émulsion obtenue par battage de miel dans l'albumine, et non pas d'une mousse comme dans le cas de la présente invention.

Le document US—A—2,052,358 décrit une mousse de miel crémé obtenue par battage avec de l'air d'un miel contenant des micro-cristaux de dextrose dont on a favorisé la formation par refroidissement préalable. Il s'agit là d'un produit allégé, solide, analogue à un fondant, d'une densité de l'ordre de 0,75, qu'on peut ramollir par chauffage pour utilisation. Il peut contenir, accessoirement, de l'albumine et de la pectine et son contenu en eau est inférieur à 20%.

La mousse de miel de l'invention, au contraire, ne présente pas une structure rigide devant être amollie par la chaleur. Sa consistance, quoi-que ferme, est douce et moelleuse même à des températures inférieures à la température ambiante (par exemple entre 10 et 20°C), et elle n'a aucune tendance à couler comme le miel liquide ordinaire. Sa consistance, s'apparente quelque peu à celle de la mayonnaise.

Comme stabilisateur de la présente mousse, on peut utiliser des polysaccharides comme additifs de structure, tels que les gommes arabique, tragacanthe, xanthane et autres gommes similaires, la pectine ainsi que des polypeptides ou protéines, tels que la gélatine. De manière générale, la quantité de stabilisateur utilisé dans la présente mousse est de l'ordre de 0,1 à 1,5% en poids, de préférence 0,3 à 0,7%, mais ces quantités peuvent être outrepassées dans un sens ou dans l'autre, si besoin est dans certains cas spéciaux.

La présente mousse contient un ou plusieurs agents foisonnants et moussants à choisir parmi l'albumine et les hydrolysats de protéines utilisés dans l'industrie alimentaire, par exemple des hydrolysats de protéines végétales, telles que celles de soja ou des hydrolysats de protéines animales, telles que la caséine. On peut se procurer de tels agents moussants sous les noms de Hyfoama [LEDERING (Hollande)] ou Biambel [BEL Industries, France] parmi d'autres produits similaires. Quant à l'albumine, on peut utiliser de l'albumine en poudre dissoute dans l'eau suivant les moyens habituels ou du blanc d'oeuf frais. Les quantités d'agents moussants que contient la présente mousse de miel sont de l'ordre de 0,1 à 1,2% en poids de produit sec par rapport au miel de départ, de préférence, de 0,3 à 0,6%.

Le miel contient toujours, à l'état naturel, une certaine quantité d'eau.

La présente mousse contient de préférence une quantité d'eau (par rapport aux solides du miel de départ) de l'ordre de 20 à 30%. Comme de manière générale, et suivant son origine, le miel brut contient de 15 à 22% d'eau, il pourra être nécessaire, suivant la forme d'exécution de la présente mousse, d'y ajouter lors de sa fabrication une certaine quantité d'eau lorsque le miel de départ n'en contient pas suffisamment. On notera que le terme de "miel" utilisé ici peut designer aussi bien les miels d'abeilles que les miels d'origine végétale, tels que les sirops concentrés, par exemple le sirop d'érable. On notera aussi que la quantité maximale d'eau admissible de la mousse de miel crémé décrite dans le document US—A—2,052,358 est inférieure à 20% en poids.

Avantageusement, la présente mousse de miel contient encore de 0,01 à 0,5% en poids (par rapport au miel d'origine) d'un colorant alimentaire, de préférence, hydrosoluble ou hydrodispersable destiné à conférer à la mousse une coloration rappelant celle du miel naturel. En effet, il est évident que la présence d'une multitude de bulles d'air ou de gaz microscopiques dispersés dans le miel provoquent un éclaircissement considérable de sa teinte originale et que, pour des raisons commerciales, il est préférable de donner à cette mousse une coloration plus vive. Comme colorants, on préfère utiliser des colorants jaunes, orangés ou bruns naturels, tels que, par exemple, les β-caroténoïdes, flavonoïdes et dérivés du safran. Parmi ces colorants, on peut citer les colorants suivants: Apocaroténal et Canthaxanthine (ROCHE); le dernier de ces colorants est dérivé du paprika. Il est à noter que, lors du stockage de la mousse dans des récipients transparents appropriés (verre, plastique alimentaire, etc.) on peut atténuer l'effet "blanchissant" des bulles de gaz de la mousse à la périphérie (c'est-à-dire à l'interface entre la mousse et les parois du récipient) par l'application d'une pression au remplissage, celle-ci ayant pour effet de faire

2

EP 0 277 150 B1

disparaître une certaine proportion desdites bulles en contact avec ledit interface et donc d'aviver sa couleur.

Pour préparer la mousse de miel de la présente invention, on ajoute successivement au miel brut de départ, sous agitation modérée et en chauffant légèrement, le ou les agents stabilisants, le supplément d'eau éventuel et l'agent ou les agents moussants; puis, lorsque la température du mélange (devenu liquide et homogène) est située entre 40 et 50°C, on procède à un battage vigoureux en présence d'air ou d'un gaz dans un batteur de type habituel pour le battage des oeufs en neige ou de la crème chantilly. Une telle violente agitation conduit à un refroidissement de la masse, sa température pasant, au cours du battage de 40—50°C à 25—35°C. Ce traitement conduit à une mousse légère et stable et densité inférieure à 0,7, plus généralement comprise entre 0,5 et 0,7. La durée de battage varie entre généralement 3 et 30 min suivant les propriétés qu'on désire conférer à la mousse; en général, un battage de longue durée conduit à un produit de consistance plus élastique qu'un battage court. Généralement, on préfère arrêter le battage lorsque la température, de 40—50°C au départ, est retombée à la valeur de la température ambiante. Si désiré, on peut, lors du battage, éloigner la source de chaleur utilisée lors de la formation du mélange miel-eau-additifs.

Les résultats qu'on obtient suivant ce procédé et la faible densité de la mousse qui en résulte sont surprenants si on se réfère au produit décrit dans le document US—A—1,686,556 lequel fournit, non pas une mousse, mais une émulsion en forme de pâte. Il est probable qu'une des raisons de ces différences est contituée par la température de battage, 80°C dans la référence alors que, dans l'invention, il importe de ne pas dépasser 50°C. Une température trop élevée peut en effet conduire à une gélatinisation et dénaturation prématurée des ingrédients. Une autre différence provient probablement du fait que dans la référence, l'albumine d'oeuf est préalablement battue et que, ensuite, le miel est battu avec cette albumine préalablement battue; en effet, si, en variante du procédé de l'invention décrit ci-dessus, on mélange du blanc d'oeuf battu avec la solution de miel contenant les autres ingrédients restants, il faut prendre garde de ne pas rompre cette "neige" d'albumine par une agitation violente, mais bien l'incorporer document par stratification.

Lorsque, dans le présent procédé de fabrication, on incorpore un ou des colorants, on ajoute ceux-ci en même temps que l'agent foisonnant, avant battage. On peut également ajouter au mélange des protéines lactées, par exemple du lait écrémé.

La présente mousse de miel est stable au stockage pendant de longues périodes et, si correctement préparée, ne présente pas de synérèse, c'est-à-dire de séparation de phases. Son goût est très fin et sensiblement plus "arrondi" que celui du miel d'origine; etlle peut être consommée comme le miel ordinaire et, en plus, du fait de sa légèreté, elle peut être avantageusement utilisée en pâtisserie (pour des remplissages de tourtes et gâteaux) et en confiserie pour les bonbons au chocolat; sa structure est fine et douce quoique ferme et ne peut en aucun cas être confondue avec celle des "marshmallows", guimauve et autres nougâts tendres.

Par ailleurs la présente mousse peut être transformée en différents autres aliments, par exemple par incorporation de morceaux de fruits secs, d'amandes, noix, noisettes, entières ou pilées, la proportion de telles additions pouvant être de l'ordre de 10 à 50% en poids. De plus, en peut utiliser la présente mousse de miel pour la fabrication d'aliments équilibrés par addition de protéines, par exemple poudre de lait ou autres protéines, d'origine animale ou végétale. De tels aliments peuvent se présenter sous forme d'émulsions, de crèmes de yaourts, de pâtes à tartiner ou à manger telles-quelles.

Les exemples qui suivent illustrent l'invention.

Exemple 1

Dans un récipient muni d'un agitateur, on a placé 88,1 g de miel du commerce (NECTAR FLOR) contenant 19% d'eau. On a ajouté et dispersé par lente agitation, tout en chauffant à 40—50°C, 0,4 g de gomme xanthanne, 11 g d'eau, 0,5 g de Hyfoama DS et 0,3 g d'une solution aqueuse à 10% de cantaxanthine. On a ensuite procédé à un battage vigoureux de 8 min dans un batteur de marque HOBART, la source de chauffage ayant été enlevée. A l'issue de la période de battage, la température était retombée à 25°C.

On a ainsi obtenu une mousse légère (densité 0,55) de couleur jaune et de goût très fin. Cette mousse ne présentait aucun phénomène de séparation de phases après un stockage prolongé à température ambiante dans un récipient fermé.

Exemple 2

On a procédé comme ci-dessus, mais avec les différences suivants: miel 88,7 g; eau 9 g; Xanthanne 0,3 g; Hyfoama 2 g de solution aqueuse à 20%; colorant, 0,45 g de β-carotène sous forme de solution aqueuse à 10%. Le battage a duré 6 min et a fourni une mousse de densité 0,6 dont les propriétés étaient sensiblement les mêmes que la mousse de l'Exemple 1.

Exemple 3

On a procédé comme dans les Exemples précédents et préparé les compositions indiquées ci-dessous au moyen des ingrédients indiqués; dans chaque composition on a ajouté, en outre, 9 g d'eau et 0,5 g de gomme Xanthanne et 0,45 g de solution aqueuse à 10% de colorant β-caroténal.

3

# EP 0 277 150 B1

| Composition | Miel (g) | Agent moussant (g) |
|---|---|---|
| 1 | MIGROS (87) | Albumine/eau (0,7/2,8) |
| 2 | MIGROS (87) | Hyfoama/eau (0,7/2,8) |
| 3 | MELLONA (87) | Albumine/Hyfoama/eau (0,7/0,7/2,8) |
| 4 | ACACIA (86, 75) | Hyfoama/eau (0,75/3) |

On a soumis les compositions 1 à 4 ci-dessus à un battage pendant les temps indiqués ci-dessous, la température au début du battage étant également indiquée ainsi que la densité de la mousse.

| Composition | Température (°C) | Battage (min) | Densité de la mousse |
|---|---|---|---|
| 1 | 50 | 7 | 0,7 |
| 2 | 50 | 7 | 0,7 |
| 3 | 45 | 6 | 0,4 |
| 4 | 45 | 6 | 0,55 |

Les mousses de miel obtenues grâce aux compositions 1 à 4 étaient douces, légères et excellentes au goût. Elles se sont conservées sans synérèse pendant une très longue période.

Exemple 4

Suivant le procédé décrit aux Exemples précédentes, on a préparé les compositions numérotées 5 à 8 au moyen des ingrédients suivants aux quantités indiquées (g). Température de dissolution 40—45°C.

| Ingrédients (g) | Composition | | | |
|---|---|---|---|---|
| | 5 | 6 | 7 | 8 |
| Miel | 77,85 | 77,85 | 74,63 | 74,63 |
| Acide citrique monohydrate | 0,25 | 0,25 | 0,24 | 0,24 |
| Lait écrémé | 10 | 10 | 9,52 | 9,52 |
| Gomme Xanthane (CX-91) | 0,2 | 0,2 | 0,19 | 0,19 |
| Gomme Guar (MEYPROGUAR)* | 0,2 | 0,2 | 0,19 | 0,19 |
| Hyfoama** | 0,3 | 0,3 | 0,38 | 0,38 |
| Eau | 11,2 | 9,67 | 10,09 | 10,19 |
| Apocarotenone ester (solution aquese à 10%) | 0,86 | 1,7 | — | — |
| Noisettes rapées | — | — | 4,76 | — |
| Exorces d'oranges | — | — | — | 4,76 |
| Contenu total en eau (% en poids) | 25 | 25 | 26,5 | 26 |

*Produit vendu par la Société Meihall à Kreuzlingen.
**Compté comme poids sec mais ajouté sous forme d'une solution aqueuse à 20% (1,5 g pour composition 5 et 6; 1,9 g pour composition 7 et 8).

On a ensuite procédé au battage de ces composition dans les conditions suivantes et obtenu des mousses aux propriétés suivantes:

4

# EP 0 277 150 B1

| | Composition | | | |
|---|---|---|---|---|
| | 5 | 6 | 7 | 8 |
| Temps de battage (min) | 2,5 | 3 | 1,5 | 1,5 |
| Température en fin de battage (°C) | 30 | 30 | 25 | 28 |
| pH | 5,4 | 5,25 | 5,3 | 5,3 |
| Densité de la mousse | 0,6 | 0,62 | 0,6 | 0,6 |

## Revendications

1. Mousse de miel fondu et non crémé constituée par une dispersion de microbulles d'air ou d'un gaz inerte dans du miel, cette mousse contenant au moins un stabilisateur et au moins un agent foisonnant, caractérisée par le fait que sa densité est de 0,7 ou moins et que sa consistance est moelleuse à température ambiente bien qu'elle ne coule pas.

2. Mousse de miel suivant la revendication 1, caractérisée par le fait que le stabilisateur est choisi parmi les carbohydrates et polypeptides réticulés de qualité alimentaire en quantité de 0,1 à 1,5% en poids par rapport au miel de départ.

3. Mousse de miel suivant la revendication 2, caractérisée par le fait que le stabilisateur est choisi parmi les gommes naturelles, notamment les gommes arabiques, xanthanne, guar, ainsi que la gélatine.

4. Mousse de miel suivant la revendication 1, caractérisée par le fait que l'agent foisonnant est choisi parmi les hydrolysats moussants de protéines végétales et animales, notamment de soja et de caséine, ainsi que l'albumine, la quantité d'agent ou d'agents foisonnants, en poids par rapport au miel de départ, étant de 0,1 à 1,2%.

5. Mousse de miel suivant la revendication 1, caractérisée par le fait que son contenu en eau est de 20 à 30%.

6. Mousse de miel suivant la revendication 1, caractérisée par le fait qu'elle contient, en plus, de 0,01 à 0,5% en poids d'un colorant alimentaire, notamment un colorant naturel choisi parmi les β-caroténoïdes, les flavonoïdes et les dérivés du safran.

7. Mousse de miel suivant la revendication 1, caractérisée par le fait qu'elle contient, en addition, des protéines lactées ou du lait écrémé.

8. Procédé de préparation de la mousse de miel suivant la revendication 1, caractérisée par le fait qu'on mélange au miel, entre 25 et 50°C, les agents stabilisants et moussants ainsi que l'eau additionnelle, puis qu'on procède au battage vigoureux dudit mélange en présence d'air ou d'un gaz inerte tel que $N_2$, de manière à le faire mousser, l'effet additionnel de cette opération étant de provoquer un refroidissement de la mousse à 25—35°.

9. Procédé suivant la revendication 8, caractérisée par le fait qu'on ajoute, en plus, aux ingrédients susmentionnés, un colorant alimentaire et/ou des protéines lactés avant d'effectuer la battage.

10. Procédé suivant la revendication 8, caractérisée par le fait que la durée de battage est de 3 à 30 min.

## Patentansprüche

1. Geschmolzener und nichtsahniger Honigschaum, gebildet aus einer Dispersion von Mikroblasen aus Luft oder einem Inertgas in dem Honig, wobei der Schaum mindestens einen Stabilisator und mindestens ein Blähmittel enthält, dadurch gekennzeichnet, daß seine Dichte 0,7 oder weniger beträgt und daß seine Konsistenz bei Umgebungstemperatur weich, aber nicht flüssig ist.

2. Honigschaum nach Anspruch 1, dadurch gekennzeichnet, daß der Stabilisator aus eßbaren Kohlenhydraten und vernetzten Polypeptiden in einer Menge von 0,1 bis 1,5%, bezogen auf das Gewicht des Ausgangshonigs, ausgewählt ist.

3. Honigschaum nach Anspruch 2, dadurch gekennzeichnet, daß der Stabilisator aus natürlichem Gummi, insbesondere Gummi arabicum, Xanthan, Guar sowie Gelatine ausgewählt ist.

4. Honigschaum nach Anspruch 1, dadurch gekennzeichnet, daß das Blähmittel aus den schäumenden Hydrolysaten von pflanzlichen und tierischen Proteinen, insbesondere von Soja und Casein, sowie Albumin ausgewählt ist, wobei die Menge des Mittels oder des Blähmittels, bezogen auf das Gewicht des Ausgangshonigs, 0,1 bis 1,2% beträgt.

5. Honigschaum nach Anspruch 1, dadurch gekennzeichnet, daß sein Wassergehalt 20 bis 30% beträgt.

6. Honigschaum nach Anspruch 1, dadurch gekennzeichnet, daß er weiterhin 0,01 bis 0,5 Gew.-% eines eßbaren Farbstoffes, insbesondere eines natürlichen Farbstoffes, ausgewählt aus den β-Carotinoiden, den Flavonoiden und den Safranderivaten, enthält.

7. Honigschaum nach Anspruch 1, dadurch gekennzeichnet, daß er außerdem Milcheiweiß oder entrahmte Milch enthält.

5

8. Verfahren zur Herstellung des Honigschaums nach Anspruch 1, dadurch gekennzeichnet, daß man Honig bei 25 bis 50°C mit den Stabilisierungs- und den Schäumungsmitteln sowie zusätzlichem Wasser mischt, daß man dann diese Mischung in Gegenwart von Luft oder des Inertgases, wie $N_2$, kräftig aufschlägt, um so einen Schaum zu erzeugen, wobei eine zusätzliche Wirkung dieser Arbeitsweise darin besteht, daß eine Abkühlung des Schaums auf 25 bis 35°C hervorgerufen wird.

9. Verfahren nach Anspruch 8, dadurch gekennzeichnet, daß man außerdem vor dem Aufschlagen die vorstehend erwähnten Ingredientien, einen eßbaren Farbstoff und/oder das Milcheiweiß hinzufügt.

10. Verfahren nach Anspruch 8, dadurch gekennzeichnet, daß die Dauer des Aufschlagens 3 bis 30 min beträgt.

## Claims

1. A mousse of melted and uncreamed honey consisting of a dispersion of very small air or inert gas bubbles in honey, said mousse containing at least one stabilizer and at least one foaming agent, characterized in that the density is 0.7 or less and that its consistency is soft at room temperature although it is not runny.

2. A honey mousse according to Claim 1, characterized in that the stabilizer is selected among crosslinked carbohydrates and polypeptides of food quality in the amount of 0.1 to 1.5% by weight with respect to the original honey.

3. A honey mousse according to Claim 2, characterized in that the stabilizer is selected among natural gums, particularly gum arabic, xanthan, guar, as well as gelatin.

4. A honey mousse according to Claim 1, characterized in that the foaming agent is selected among foaming hydrolysates of vegetable and animal proteins, particularly soybean and casein, as well as egg white, the amount of the foaming agent or agents, by weight with respect to the original honey, being from 0.1 to 1.2%.

5. A honey mousse according to Claim 1, characterized in that its water content is between 20 and 30%.

6. A honey mousse according to Claim 1, characterized in that it also contains 0.01 to 0.5% by weight of a food coloring agent, particularly a natural coloring agent selected among β-carotenoids, flavonoids and derivatives of saffron.

7. A honey mousse according to Claim 1, characterized in that it also contains milk proteins or skimmed milk.

8. A process for the preparation of the honey mousse according to Claim 1, characterized in that the stabilizing and foaming agents as well as additional water are mixed with the honey at between 25 and 50°C, and said mixture is then beaten vigorously in the presence of air or an inert gas, such as $N_2$, in order to foam it, an additional effect of this operation being the cooling of the mousse to 25—35°.

9. A process according to Claim 8, characterized in that a food coloring agent and/or milk proteins are also added to the above-mentioned ingredients before carrying out the beating.

10. A process according to Claim 8, characterized in that the duration of the beating is 3 to 30 minutes.